Europäisches Patentamt

European Patent Office

Office européen des brevets

(11) Numéro de publication: **0 116 506**
**B1**

(12) # FASCICULE DE BREVET EUROPÉEN

(45) Date de publication du fascicule du brevet:
**19.04.89**

(51) Int. Cl.⁴: **B 29 C 37/00, B 29 C 41/08**

(21) Numéro de dépôt: **84400258.4**

(22) Date de dépôt: **07.02.84**

(54) Procédé de moulage d'objets creux en matière plastique comportant une couche de finition apportée au cours de moulage.

(30) Priorité: **10.02.83 FR 8302151**

(43) Date de publication de la demande:
**22.08.84 Bulletin 84/34**

(45) Mention de la délivrance du brevet:
**19.04.89 Bulletin 89/16**

(84) Etats contractants désignés:
**AT BE CH DE FR GB IT LI LU NL SE**

(56) Documents cité:
**EP-A-0 001 865**
**EP-A-0 019 947**
**CH-A-310 311**
**DE-A-1 546 799**
**DE-A-2 714 203**
**FR-A-1 576 969**
**FR-A-2 180 676**

**PATENT ABSTRACTS OF JAPAN, vol. 6, no. 109, 19 juin 1982, page 86 M 137**

(73) Titulaire: **GROUPE AXINOVE Société Anonyme dite:, 88 avenue du Général de Gaulle, F-92130 Issy- les- Moulineaux (FR)**
Titulaire: **Compagnie Internationale des Produits Sanitaires - C.I.P.S., 122/126 rue du Château des Rentiers, F-75640 Paris Cedex 13 (FR)**

(72) Inventeur: **Favreau, Jean, 144 bld Exelmans, F-75016 Paris (FR)**

(74) Mandataire: **Epstein, Henri, 7 Rue du Temple, F-95880 Enghien les Bains (FR)**

**EP 0 116 506 B1**

**Description**

La présente invention se rapporte à un procédé de moulage d'objets creux selon le préambule de la revendication 1.

Un tels procédé connu des documents JP-A-5 739 925 et EP-A-1 865 a pour objet d'appliquer au cours du moulage une couche extérieure de finition ou de protection à la composition de moulage constituant le substrat, de sorte que le produit démoulé soit muni d'une pellicule présentant une bonne adhérence. En procédant ainsi, aucun traitement de finition de surface n'est plus nécessaire et l'opération de fabrication de tels objets creux se limite à l'opération de moulage.

En tant que substrat est surtout utilisé un matériau en feuilles, notamment des feuilles en polyester pour moulage.

Selon les techniques connues à ce jour, le revêtement appliqué à la paroi chauffée était constitué par la poudre de polyester, soit partiellement polymérisé, soit en mélange avec un monomère réticulant, additionné de catalyseur.

L'emploi de poudres de polyester a paru particulièrement attrayant, lorsque le substrat est constitué par des feuilles de polyester pour moulage, pour des raisons de compatibilité. Toutefois, un revêtement en polyester ne répond pas toujours aux propriétés exigées dans la fabrication des objets ayant une apparence décorative. En effet, lorsque le revêtement en polyester est de couleur claire, des tâches jaunâtres apparaissent qui nuisent à l'aspect extérieur de l'objet. En outre, le degré de transparence du revêtement en polyester n'est pas suffisant pour que l'on puisse obtenir des effets décoratifs variés en appliquant au verso de la couche de revêtement des couches de couleurs différentes ou un substrat imprimé de motifs décoratifs. En troisième lieu, l'aspect de surface de revêtement est limité aux aspects mat et satiné, car un haut dégré de brillance est impossible à obtenir.

Le remplacement du polyester par d'autres matières plastiques de revêtement ne présentant pas ces inconvénients n'avait pas été possible du fait de l'incompatibilité entre les résines qui s'opposait à l'obtention d'une bonne adhérence entre les couches constituées par des résines différentes. Selon les résultats de travaux ayant conduit à la présente invention, on a constaté de façon inattendue que d'autres matières plastiques synthétiques peuvent avantageusement être employées sous forme de poudre pour constituer le revêtement de l'objet moulé, sans aucune perte de ses qualités d'adhérence.

La présente invention a pour objet un procédé du genre précité, caractérisé en ce qu'on applique par pulvérisation sur la paroi interne du moule chauffé à une température de 130° à 180°C une poudre sèche composée exclusivement d'une matière plastique choisie dans le groupe constitué par les phénoplastes et les aminoplastes et notamment la mélamine-formaldéhyde, l'urée-formaldéhyde et le phénol-formaldéhyde, dont les particules se gélifient au contact de la paroi chaude du moule sans couler pour former un revêtement.

Les résines employées sont des résines de polycondensation, qui contrairement aux polyesters polymérisant par la voie radicalaire, réticulent par voie ionique avec élimination d'eau. A cause de ce mécanisme de réticulation différent, un préjugé s'opposait à l'emploi de ces résines, car on craignait que l'évaporation brutale d'eau éliminée pendant le durcissement ne conduise à des aspects de surface indésirables.

Il s'est avéré, contre toute attente, que l'application de matières plastiques précitées permet d'obtenir des objets, dont le revêtement formé in situ dans le moule, présente, outre une très bonne adhérence au substrat, une résistance à l'abrasion et aux rayures, aux agents chimiques, à la brûlure de cigarette et à l'action de l'eau chaude, ainsi qu'une bonne résistance thermique.

La matière plastique particulièrement recommandée est la mélamine-formaldéhyde plastifiée aux monomères de polyamides, tels que caprolactame et lauryllactame, au saccharose ou au sorbitol, dont la composition comprend un accélérateur, par exemple du diammonium imido sulfonate, de granulométrie variant entre 10 et 100 μ, de préférence entre 10 et 60 μ, et qui peut contenir des charges minérales, telles que du carbonate de calcium, des particules microscopiques de silice et des micro-billes de verre, ainsi que des pigments.

Selon un mode de réalisation avantageux, l'épaisseur de la couche de revêtement appliqué est égale ou inférieure à 120 μ. En effet, on a constaté, que pour des résultats comparables, la quantité nécessaire de matière de revêtement, lorsqu'on applique des résines selon l'invention, est de beaucoup inférieure à celle nécessaire, lorsqu'on applique un revêtement en polyester, ce qui permet de réaliser une économie substantielle de matière employée.

Selon une autre caractéristique de l'invention, l'accélérateur est utilisé en quantité telle, que le temps de durcissement est d'au moins une minute. Lorsqu'elle ne contient pas de charges, la composition selon l'invention se présente sous forme d'une poudre blanche cristalline, qui après gélification donne une couche de revêtement transparente. La nature transparente de cette couche permet l'obtention d'une large gamme d'effets décoratifs. Après avoir revêtu la paroi du moule au moyen de cette composition, on peut soit appliquer sur ce revêtement plusieurs couches de couleurs différentes, soit placer dessus un substrat imprégné de motifs décoratifs. Le substrat utilisé pour le moulage peut consister soit en feuilles de matière plastique pour moulage, par exemple en polyester, soit en une matière plastique thermodurcissable en vrac, telle que polyester, ou mousses de polyester, soit encore en mats de fibres de verre imprégnés.

La poudre de matière plastique doit être exempte de toute matière volatile ou susceptible de s'évaporer sous l'effet de la chaleur. Son point de ramollissement doit se situer entre 130 et 170°C, de préférence à environ 150°C.

2

Des plastifiants utilisés peuvent comprendre, outre le caprolactame, le lauryllactame ou autres monomères de polyamides, ainsi que des carbohydrates tels que le glucose ou le saccharose, ou des polyalcools tels que le sorbitol, dont les proportions peuvent atteindre 12 %.

Des accélérateurs autres que le diammonium imido sulfonate peuvent également être employés, tels que par exemple des sels d'amines, par exemple des chlorures d'amines, ou des composés sulfitiques de cation bivalent. Le taux employé peut atteindre 5 %, mais on utilisera de préférence des taux réduits, par exemple de 1 à 3 % pour ralentir le processus de durcissement.

Selon un exemple de réalisation du procédé selon l'invention, on a procédé à la fabrication d'une baignoire de la façon suivante. Un moule de forme appropriée était maintenu, grâce à un dispositif thermostaté, à une température aux environs de 150°C.

On a préparé un mélange de granulométrie d'environ 50 μ de composition suivante:

| | |
|---|---|
| mélamine-formaldéhyde (point de ramollissement 150°C) | 80,5 % |
| caprolactame | 8,0 % |
| diammonium imido sulfonate | 1,5 % |
| bleu de cobalt | 10,0 % |

300 g de cette poudre ont été pulvérisés au moyen d'un pistolet électrostatique sur la paroi chauffée du moule en trois étapes, chacune consistant à recouvrir le moule d'une couche d'environ 30 μ d'épaisseur.

Après la dernière pulvérisation, l'épaisseur du revêtement était d'environ 100 μ. La gélification au contact des parois était d'autant plus rapide, que l'épaisseur de couches était faible et aucune coulée de résine ne se produisait lors de son application.

On a placé ensuite des feuilles de polyester dans le moule que l'on a recouvert d'un contre-moule et on a maintenu l'ensemble sous pression pendant environ 3 minutes.

Après démoulage, on a constaté que le revêtement avait un bel aspect brillant et uniformément coloré et que l'adhérence du revêtement était bonne.

Une série de tests a donné les résultats suivants;
l'abrasimètre TABER: 500 tours - dureté BACOLL : 80
brûlure de cigarette (NFT 54-356) : intact
produits domestiques (NFT 54-257) : intact
xenotest (NFT 51-056) : stable après 790 heures
acide citrique à 10 % : classe AA
résistance thermique superficielle à 180°C (NFT 54-354) : intact
test à la rayure (méthode RENAULT 1221 et 1010) ) : > 1000 g
eau à 100°C pendant 100 heures (EP 825 E) : intact
stabilité thermique à 165°C (EP 823 E) : intact.

A titre d'essai comparatif, on a procédé à la même fabrication en utilisant à la place de la résine mélamine-formaldéhyde une résine polyester constituée par un produit de condensation d'alcool polyvalent insaturé et d'anhydride d'acide, additionné d'un prépolymère et monomère de réticulation et d'un catalyseur au peroxyde.

Le mélange de poudre a été appliqué dans les mêmes conditions que précédemment pour former une couche de 100 μ d'épaisseur. Après achèvement de la fabrication, le produit démoulé était d'aspect satiné et présentait des trainées incolores sur des faces obliques et verticales. En poursuivant des essais d'application du même mélange de résine polyester, on a constaté que ce n'est qu'en triplant la quantité de poudre que l'on obtenait un article de coloration acceptable.

On a soumis aux tests comparatifs des échantillons de plaques, d'une part obtenues selon le procédé de la présente invention et, d'autre part résultant de l'application de la résine polyester. Les résultats de ces tests sort présentés dans le tableau suivant :

| | Mélamine-formol | Polyester |
|---|---|---|
| Test au Scotch (ASTM-D3359) | 0 | 0 |
| Abrasion (TABER, par tranche de 100 tours jusqu'à 800 tours) | 0,6 mg | 0,75 mg |
| Brillance (ASTM-D523) | 48% | 37% |
| Test à la rayure (d'après CLEMEN, DEF-1053 appareillage ERICHSEN) | | |
| a) rayure visible à l'oeil, indélébile insensible au toucher | 100g | 125g |
| b) rayure visible à l'oeil, indélébile perceptible au toucher | 350g | 400g |

Ces résultats démontrent l'équivalence des deux revêtements quant à l'adhérence du revêtement et une supériorité du revêtement à la mélamine-formaldéhyde quant à la brillance et la résistance à l'abrasion et à la rayure.

Ces avantages joints à l'économie de matière réalisée par le procédé selon l'invention confèrent à l'invention un caractère d'innovation et de progrès technique certain.

Ainsi se trouve résolu le problème d'obtention des produits, notamment utilisables dans le domaine sanitaire, présentant des caractéristiques esthétiques certaines alliées à de bonnes propriétés de résistance à l'abrasion et à la rayure, grâce à la combinaison d'un substrat de résine thermodurcissable, à base de polyester, et d'un revêtement choisi exclusivement parmi les résines phénoplastes et aminoplastes, notamment la mélamine formaldéhyde.

L'invention s'étend aux produits et articles sanitaires, par exemple baignoires, receveurs, tubs, bacs, bidets, cuvettes, éviers, lavabos et analogues, obtenus selon le procédé de l'invention.

De même, les matériaux obtenus par le procédé selon l'invention trouvent leur application dans de nombreux autres domaines, par exemple des pièces moulées pour le mobilier intérieur de véhicules et d'installations de transport urbain, des cellules modulaires d'habitat, tels que abris urbains, cabines et kiosques, des carters ou réservoirs, des parties de carrosseries de voiture et autres.

Tout particulièrement, les pièces moulées selon le procédé de l'invention combinant un substrat de mousse de polyester, et un revêtement choisi parmi les résines phénoplastes et aminoplastes, notamment la mélamine-formaldéhyde, conviennent à la fabrication des armoires frigorifiques et réfrigérateurs.

## Revendications

1. Procédé de moulage d'objets creux en matière plastique synthétique consistant à revêtir la paroi intérieur d'un moule chauffé d'une poudre de matière plastique thermodurcissable, puis à placer dans le moule une composition de moulage comprenant une résine thermodurcissable à base de polyesters, des charges minérales et un catalyseur, à durcir et polymériser le contenu du moule par application de la chaleur et de la pression et à démouler l'objet dont le revêtement est solidement ancré à la composition de moulage, caractérisé en ce qu'on applique par pulvérisation sur la paroi du moule chauffé à une température de 130 à 180°C une poudre sèche composée exclusivement d'une matière plastique choisie dans le groupe constitué par les phénoplastes et les aminoplastes, dont les particules se gélifient au contact de la paroi chaude du moule sans couler pour former un revêtement.

2. Procédé selon la revendication 1, caractérisé en ce que la matière plastique en poudre est choisie dans le groupe comprenant la mélamine-formaldéhyde, l'urée-formaldéhyde et le phénol-formaldéhyde.

3. Procédé selon l'une des revendictions 1 à 2, caractérisé en ce que la matière plastique en poudre est de la mélamine-formaldéhyde contenant un plastifiant choisi dans le groupe comprenant des monomères de polyamide, des carbohydrates et des alcools polyvalents.

4. Procédé selon la revendication 3, caractérisé en ce que la matière plastique en poudre est de la mélamine-formaldéhyde plastifiée au caprolactame dont le point de ramolissement se situe entre 150 et 160°C.

5. Procédé selon la revendication 3, caractérisé en ce que la matière plastique en poudre contient de 1 à 3 % de diammonium imido sulfonate utilisé comme accélérateur.

6. Procédé selon l'une des revendications 1 à 5, caractérisé en ce que la composition de matière plastique en poudre présente une granulométrie de 10 à 100 μ, de préférence de 10 à 50 μ.

7. Procédé selon l'une des revendications 1 à 5, caractérisé en ce que l'épaisseur de la couche de revêtement est inférieure à 120 μ.

8. Procédé selon l'une des revendications 1 à 7, caractérisé en ce que l'accélérateur est utilisé en quantité telle, que le temps de durcissement est d'au moins une minute.

9. Procédé selon l'une des revendications 1 à 8, caractérisé en ce qu' on applique sur la paroi chauffée du moule successivement plusieurs couches de la poudre de revêtement pour atteindre une épaisseur finale d'environ 100 μ.

10. Procédé selon l'une des revendications 1 à 5, caractérisé en ce que la matière plastique en poudre contient des charges minérales comprenant du carbonate de calcium, des particules de silice ou des microbilles de verre.

11. Procédé selon l'une des revendications 1 à 5, caractérisé en ce que la matière plastique contient des pigments ou des charges colorantes.

12. Procédé selon l'une des revendications 1 à 9, caractérisé en ce qu' après avoir revêtu les parois du moule au moyen de la composition de la mélamine-formaldéhyde en poudre blanche cristalline destinée à former un revêtement transparent, on applique sur ce revêtement plusieurs couches de couleurs différentes pour obtenir des effets décoratifs spéciaux.

13. Procédé selon l'une des revendications 1 à 9, caractérisé en ce qu' après avoir revêtu les parois du moule au moyen de la composition de mélamine-formaldéhyde en poudre blanche cristalline destinée à former un revêtement transparent, on place sur ce revêtement un substrat imprimé de motifs décoratifs.

14. Article sanitaire obtenu par l'application du procédé selon l'une des revendications 1 à 13, caractérisé en ce qu'il est constitué d'un substrat en résine thermodurcissable a base de polyester et d'un revêtement exclusivement à base d'une résine phénoplaste ou aminoplaste.

15. Article sanitaire obtenu par l'application du procédé selon l'une des revendications 1 à 13, caractérisé en ce qu'il est constitué d'un substrat à base de polyester et d'un revêtement à base de mélamine-formaldéhyde.

16. Armoire frigorifique obtenue par l'application du procédé selon l'une des revendications 1 à 13, caractérisée en ce qu'au moins une de ses parties est constituée d'un substrat à base de mousse de polyester et d'un revêtement exclusivement à base d'une résine phénoplaste ou aminoplaste, notamment à base de mélamine-formaldéhyde.

## Claims

1. Process for moulding hollow articles of synthetic plastic material consisting in coating the interior wall of a heated mould with a dry powder of a thermosetting material, then introducing into the mould a moulding composition comprising a polyester-based thermosetting resin, mineral fillers and a catalyst, hardening and polymerizing the content of the mould by the application of heat and pressure and releasing the article whose coating is solidly anchored in the moulding composition, characterized in that onto the wall of a mould heated at a temperature of 130 to 180°C there is sprayed a dry powder of a plastic material chosen from the group constituted exclusively by aminoplastes and phenoplastes resins, whose particles gel in contact with walls without running.

2. Process according to the claim 1, characterized in that a dry powder of a plastic material is chosen from the group comprising melamine-formaldehyde, urea-formaldehyde and phenol-formaldehyde.

3. Process according to claim 1 or 2, characterized in that the powder of plastic material is melamine-formaldehyde containing a plasticiser chosen from the group comprising polyamide monomers, carbohydrates and polyvalent alcohols.

4. Process according to claim 3, characterized in that the powder of plastic material is melamine-formaldehyde plasticised with caprolactam, whose softening point is between 150 and 160°C.

5. Process according to claim 3, characterized in that the plastic material powder contains 1 to 3 % diammonium imido sulfonate used as accelerator.

6. Process according to any of the claims 1 to 5, characterized in that the composition of the plastic material in powder form has a grain size distribution of 10 to 100 μ, preferably 10 to 50 μ.

7. Process according to any of the claims 1 to 5, characterized in that the thickness of the coating layer is less than 120 μ.

8. Process according to any of the claims 1 to 7, characterized in that the accelerator is used in a quantity such that the hardening time is less than one minute.

9. Process according to any of the claims 1 to 8, characterized in that several layers of coating powder are successively applied to the heated wall of the mould to obtain a final thickness of about 100 μ.

10. Process according to any of the claims 1 to 5, characterized in that the plastic material in powder form contains mineral fillers comprising calcium carbonate, particles of silica or micro glass beads.

11. Process according to any of the claims 1 to 5, characterized in that the plastic material contains pigments or colouring fillers.

12. Process according to any of the claims 1 to 9, characterized in that after having coated the walls of the mould with the melamine-formaldehyde composition in the form of crystalline, white powder intended to form a transparent coating, several layers of different colours are applied to this coating to obtain special decorative effects.

13. Process according to any of the claims 1 to 9, characterized in that after having coated the walls of the mould with the melamine-formaldehyde composition in the form of a crystalline, white powder intended to form a transparent coating, a substrate on which decorative designs have been printed is placed on this coating.

14. Sanitary ware article prepared by the process according to any of the claims 1 to 13, consisting of a thermosetting resin-based substrate and exclusively an aminoplaste or phenoplaste-based coating.

15. Sanitary ware article prepared by the process according to any of the claims 1 to 13, consisting of a polyester-based substrate and a melamine-formaldehyde-based coating.

16. Refrigerator box obtained by the application of the process according to any of the claims 1 to 13, characterized in that at least a part of it consists of polyester foam-based substrate coated exclusively with an aminoplaste or phenoplaste resin, in particular melamine-formaldehyde.

## Patentansprüche

1. Verfahren zum Gießen von Hohlkörpern aus Kunststoff, bei dem die Innenwand einer erwärmten Form mit einem duroplastischen Kunststoff überzogen, dann in die Form ein Gießgemisch aus duroplastischem Harz auf Polyesterbasis, mineralischen Füllstoffen und einem Katalysator gebracht, der Inhalt der Form durch Wärme- und Druckanwendung gehärtet und polymerisiert und der Körper entformt wird, dessen Überzug fest mit dem Gießgemisch verhaftet ist,

dadurch gekennzeichnet,

daß auf die Wand der auf eine Temperatur von 130 bis 180°C erwärmten Form ein ausschließlich aus Kunststoff der Gruppe von Phenoplasten und Aminoplasten bestehendes Trockenpulver aufgestäubt wird, dessen Teilchen bei Kontakt mit der warmen Wand der Form gelieren, ohne abzufließen, und einen Überzug bilden.

2. Verfahren nach Anspruch 1, dadurch gekennzeichnet, daß der pulverförmige Kunststoff aus der Gruppe von Melamin-Formaldehyd, Harnstoff-Formaldehyd und Phenol-Formaldehyd gewählt wird.

3. Verfahren nach Anspruch 1 oder 2, dadurch gekennzeichnet, daß als pulverförmiger Kunststoff Melamin-Formaldehyd mit einem Weichmacher aus der Gruppe der Polyamidmonomere, Kohlehydrate und mehrwertigen Alkohole verwendet wird.

4. Verfahren nach Anspruch 3, dadurch gekennzeichnet, daß als pulverförmiger Kunststoff mittels Caprolactam weichgemachtes Melamin-Formaldehyd mit einem Erweichungspunkt zwischen 150 und 160° C verwendet wird.

5. Verfahren nach Anspruch 3, dadurch gekennzeichnet, daß pulverförmiger Kunststoff mit einem Gehalt von 1 bis 3 % an Diammoniumimidosulfat als Beschleuniger verwendet wird.

6. Verfahren nach einem der Ansprüche 1 bis 5, dadurch gekennzeichnet, daß pulverförmiges Kunststoffgemisch mit einer Korngröße von 10 bis 100 μ, vorzugsweise von 10 bis 50 μ verwendet wird.

7. Verfahren nach einem der Ansprüche 1 bis 5, dadurch gekennzeichnet, daß die Dicke der Deckschicht kleiner als 120 μ ist.

8. Verfahren nach einem der Ansprüche 1 bis 7, dadurch gekennzeichnet, daß Beschleuniger in einer solchen Menge gewählt wird, daß die Aushärtzeit wenigstens eine Minute beträgt.

9. Verfahren nach einem der Ansprüche 1 bis 8, dadurch gekennzeichnet, daß auf die erwärmte Wand der Form nacheinander mehrere Schichten Überzugspulver bis zur einer Endschichtdicke von etwa 100 μ aufgebracht werden.

10. Verfahren nach einem der Ansprüche 1 bis 5, dadurch gekennzeichnet, daß pulverförmiger Kunststoff mit aus Calciumcarbonat, Siliziumpartikeln oder Mikroglaskugeln bestehendem mineralischem Füllstoff verwendet wird.

11. Verfahren nach einem der Ansprüche 1 bis 5, dadurch gekennzeichnet, daß pulverförmiger Kunststoff mit Pigmenten oder Farbstoffen verwendet wird.

12. Verfahren nach einem der Ansprüche 1 bis 9, dadurch gekennzeichnet, daß anschließend an das Überziehen der Wände der Form mit pulverförmigem, weißem, kristallinem Melamin-Formaldehyd-Gemisch zum Ausbilden eines transparenten Überzugs auf diesen Überzug für spezielle dekorative Effekte mehrere verschiedenfarbige Schichten aufgebracht werden.

13. Verfahren nach einem der Ansprüche 1 bis 9, dadurch gekennzeichnet, daß anschließend an das Überziehen der Wände der Form mit pulverförmigem, weißem, kristallinem Melamin-Formaldehyd-Gemisch zum Ausbilden eines transparenten Überzugs dieser Überzug mit einer mit dekorativen Motiven bedruckten Trägerschicht versehen wird.

14. Sanitärartikel, hergestellt gemäß dem Verfahren nach einem der Ansprüche 1 bis 13, dadurch gekennzeichnet, daß er einen Träger aus duroplastischem Harz auf Polyesterbasis und einen ausschließlich auf einem phenoplastischen oder aminoplastischen Harz basierenden Überzug aufweist.

15. Sanitärartikel, hergestellt gemäß dem Verfahren nach einem der Ansprüche 1 bis 13, dadurch gekennzeichnet, daß er einen Träger aus duroplastischem Harz auf Polyesterbasis und einen auf Melamin-Formaldehyd basierenden Überzug aufweist.

16. Gefrierschrank, hergestellt gemäß dem Verfahren nach einem der Ansprüche 1 bis 13, dadurch gekennzeichnet, daß wenigstens eines seiner Teile einen Träger auf Polyesterschaumbasis und einen ausschließlich auf einem phenoplastischen oder aminoplastischen Harz, insbesondere Melamin-Formaldehyd, basierenden Überzug aufweist.